# EUROPÄISCHE PATENTSCHRIFT

(11) **EP 0 478 953 B1**
(45) Veröffentlichungstag und Bekanntmachung des Hinweises auf die Patenterteilung: **09.03.1994**
(21) Anmeldenummer: 91114419.4
(22) Anmeldetag: 28.08.1991
(51) Int. Cl.: B60T 8/00, B60T 13/66

(54) **Elektropneumatische Bremsanlage**
Electro-pneumatic brake arrangement
Installation de freinage électro-pneumatique

(30) Priorität: 01.10.1990 DE 4030980
(43) Veröffentlichungstag der Anmeldung: 08.04.1992
(73) Patentinhaber: ROBERT BOSCH GMBH, 70442 Stuttgart (DE)
(72) Erfinder: Berg, Peter, Ing., W-7146 Tamm (DE); Stumpe, Werner, Dipl.-Ing., W-7000 Stuttgart 50 (DE); Wrede, Juergen, Dipl.-Ing., W-7000 Stuttgart 50 (DE)

(56) Entgegenhaltungen:
- EP-A- 0 110 119
- EP-A- 0 250 738
- EP-A- 0 357 922
- DE-A- 2 723 847
- DE-A- 3 416 744

## Beschreibung

Die Erfindung bezieht sich auf eine elektro-pneumatische Fahrzeug-Bremsanlage nach der Gattung des Hauptanspruchs. Eine derartige Bremsanlage ist bekannt (EP-A-110119). Dort werden am jeweiligen Radbremszylinder ausgesteuerte oder in das vorgeordnete Relaisventil eingesteuerte Druck-Ist-Werte gemessen, um das Vorhandensein des Drucks zu überwachen. Auch werden ein- und ausgesteuerte Drücke miteinander verglichen und ggf. mittels der Magnetventile nachgeregelt. Jedoch erfolgt bei dieser bekannten Bremsanlage die Druckregelung am jeweiligen Fahrzeugrad unabhängig von anderen Fahrzeugrädern mit jeweils einem eigenen Drucksteuerventil. Da dann aber für die beiden links und rechts angeordneten Räder getrennte Regelkreise vorhanden sind, können die Drücke in den beiden Regelkreisen unterschiedlich werden, und zwar so unterschiedlich, daß das Fahrzeug schiefzieht, insbesondere wenn die Vorderräder des Fahrzeugs betroffen sind. Solche Druckunterschiede entstehen insbesondere im elektrischen Bremskreis durch Meßfehler der Sensoren. Es ist dann nur unter Schwierigkeiten möglich, einen notwendigen Gleichlauf der Drücke wieder herzustellen.

Bei einer abweichend gestalteten Fahrzeug-Bremsanlage mit nur einem elektrischen Steuerkreis für je einem Radbremszylinder zugeordnete Bremsdruckregelventile ist es aus DE-A-3416744 bekannt, im Fahrzeugstillstand die Bremszylinder gleichzeitig an Atmosphärendruck oder an Vorratsdruck zu legen, um Meßwerte von zwischen den Regelventilen und den Bremszylindern angeordneten Drucksensoren zu erhalten und in einem elektrischen Steuergerät zu vergleichen. Abweichungen von einer idealen Kennlinie der Drucksensoren werden durch im Steuergerät errechnete Korrekturwerte ausgeglichen und bei folgenden Bremsungen berücksichtigt.

### Vorteile der Erfindung

Die eingangs genannte Bremsanlage mit den kennzeichnenden Merkmalen des Hauptanspruchs hat den Vorteil, daß der Gleichlauf der Steuerdrücke oder Bremsdrücke im Fahrbetrieb oder auch bei z.B. an einer Ampel stehendem Fahrzeug immer wieder selbsttätig hergestellt wird.

### Zeichnung

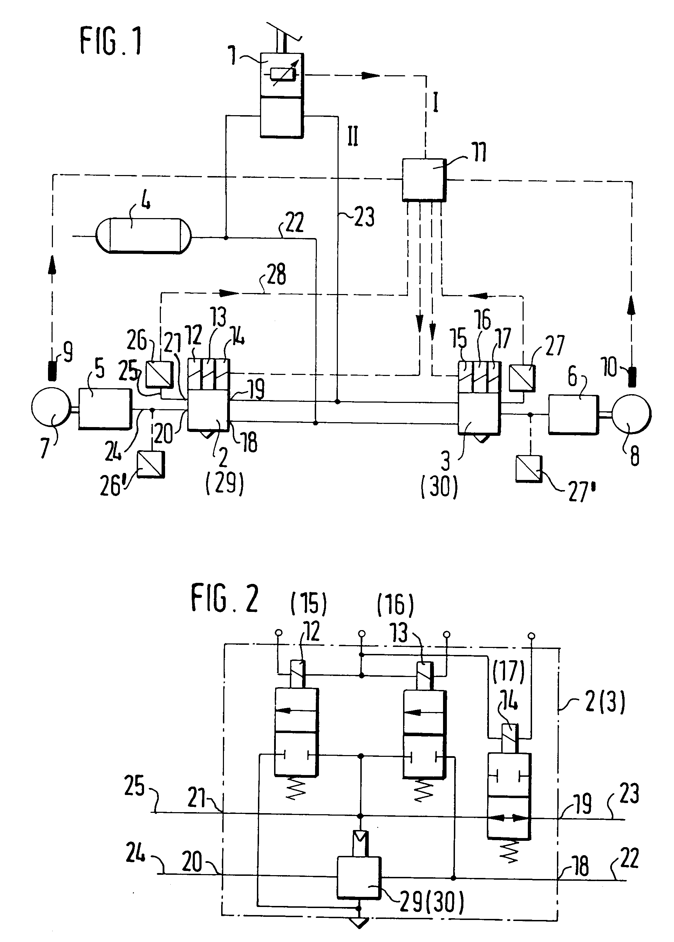

Ein Ausführungsbeispiel der Erfindung ist in der Zeichnung dargestellt und in der nachfolgenden Beschreibung näher erläutert. Es zeigen: Figur 1 ein Schema einer Bremsanlage und Figur 2 ein Schema eines Drucksteuerventils.

### Beschreibung des Ausführungsbeispiels

Eine elektro-pneumatische Bremsanlage hat einen elektro-pneumatischen Bremswertgeber 1, über den ein elektrischer Steuerkreis I und ein pneumatischer Steuerkreis II mit Bremswerten beschickbar sind. Der pneumatische Steuerkreis II führt direkt zu zwei Drucksteuerventilen 2 und 3, die einerseits an einen Druckluft-Vorratsbehälter 4 und andererseits an je einen Rad-Bremszylinder 5 und 6 angeschlossen sind. Die beiden Bremszylinder 5 und 6 betätigen die Radbremsen von Rädern 7, 8 einer gemeinsamen, nicht dargestellten Fahrzeugachse. Beide Räder 7 und 8 sind mit ABS-Drehzahlfühlern 9 und 10 ausgerüstet, die ihre Signale an ein elektronisches Steuergerät 11 abgeben.

Das Steuergerät 11 ist an den Steuerkreis I und an je drei Elektro-Magnetventile 12, 13, 14 bzw. 15, 16, 17 angeschlossen, die in jedes Drucksteuerventil 2 bzw. 3 integriert sind.

Eines der beiden Drucksteuerventile 2 und 3, nämlich das Drucksteuerventil 2 ist in der Figur 2 noch einmal vergrößert dargestellt. Dort ist besser als in der Figur 1 zu erkennen, daß jedes Drucksteuerventil 2 bzw. 3 vier pneumatische Anschlüsse 18, 19, 20 und 21 hat und ein Relaisventil 29 bzw. 30 enthält.

Der Anschluß 18 dient zur Verbindung des Arbeitsteils des Relaisventils 29 mit einer vom Vorratsbehälter 4 herangeführten Vorratsleitung 22. An den mit dem Steuerteil des Relaisventils 29 in Verbindung stehenden Anschluß 19 ist über eine Druckluft-Steuerleitung 23 der Bremswertgeber 1 angeschlossen. Der mit dem Arbeitsteil des Relaisventils 29 verbundene Anschluß 20 führt über eine Bremsleitung 24 zum Bremszylinder 5. Der mit dem Steuerteil des Relaisventils 29 verbundene Anschluß 21 hat über eine Leitung 25 Verbindung mit einem Drucksensor 26 (rechts Drucksensor 27), der andererseits über eine elektrische Leitung 28 an das elektronische Steuergerät 11 angeschlossen ist. Wie aus Figur 1 ersichtlich, kann der Drucksensor 26' (bzw. 27' beim Drucksteuerventil 3) auch an die mit dem Anschluß 20 verbundene Bremsleitung 24 zur Messung des ausgesteuerten Radbremsdrucks angeschlossen sein.

Die beiden Magnetventile 12 und 13 bzw. 15 und 16 dienen, wie die Leitungsführung im Drucksteuerventil 2 bzw. 3 erkennen läßt, der ABS-Steuerung sowie dem elektrischen Einregeln eines vom Bremswertgeber 1 vorgegebenen Drucks, das Magnetventil 13 bzw. 16 - wenn bestromt - zur Druckanstiegssteuerung und das Magnetventil 12 bzw. 15 - wenn bestromt - der Druckentlastung. Im Gegensatz dazu ist das Magnetventil 14 bzw. 17 stromlos offen und stellt auf diese Weise sicher, daß das Relaisventil 29 bzw. 30 stromlos über die Druckluft-Steuerleitung 23 angesteuert werden kann.

Das Magnetventil 14 bzw. 17 ist ein sogenanntes Rückhalt- oder Back-up-Ventil, das bei intakter Elektrik bei Bremsbeginn in Schließstellung geschaltet wird.

Bei betätigtem Bremswertgeber 1 wird zunächst das Rückhalte-Magnetventil 14 bzw. 17 in seine bestromte Schließstellung gebracht. Damit wird die Druckluft-Steuerleitung 23 vom Relaisventil 29 bzw. 30 abgetrennt. Das Magnetventil 13 bzw. 16 wird umgestellt, um vom Vorratsbehälter 4 über die Leitung 22 Druckluft zum Relaisventil 29 bzw. 30 gelangen zu lassen und dieses im Bremssinn umzustellen. Zum Bremsen wird dann vom Relaisventil 29 bzw. 30 Vorratsluft in die Leitung 24 zum Bremszylinder 5 bzw. 6 geschickt. Der dabei erreichte Ist-Druck wird vom Drucksensor 26 bzw. 27 gemessen und an das elektrische Steuergerät 11 gegeben. Erkennt das Steuergerät 11 auf zu hohen Ist-Druck, wird durch das Magnetventil 12 bzw. 15 ein Druckabbau gesteuert.

Bei normalem Bremsen bei intakter Elektrik schließt also das Magnetventil 14 bzw. 17, sobald der Bremswertgeber 1 betätigt wird. Damit wird der pneumatische Steuerkreis II unwirksam.

Wenn jedoch die Elektrik ausfällt, können die Magnetventile 12, 13, 14 und 15, 16, 17 nicht mehr bestromt werden. Deshalb erfolgt jetzt Druckeinsteuerung über den pneumatischen Steuerkreis II, denn die beiden Magnetventile 14 und 17 sind offen, wenn sie unbestromt sind.

Soll nun ein Abgleich erfolgen, so wird ein solcher bei intakter Elektrik durchgeführt. Entgegen den Gegebenheiten beim gewöhnlichen Bremsen wird dabei die Druckeinsteuerung über das Rückhalt-Magnetventil 14 bzw. 17 unter folgenden Bedingungen durchgeführt:
1. bei jeder n-ten Bremsung, die einen bestimmten Druck-Soll-Grenzwert Pₛₒₗₗ _{Grenz} nicht überschreitet und/oder bei welcher die Fahrzeug-Geschwindigkeit kleiner als eine Grenzgeschwindigkeit V_{Grenz} ist. V_{Grenz} ist ein fester Grenzwert im Steuergerät 11; die Fahrzeug-Geschwindigkeit wird z.B. aus ABS-Drehzahlfühlersignalen errechnet,
2. bei jeder n-ten Bremsung, bei der das Fahrzeug steht (aus Drehzahlfühlersignalen ermittelt),
3. am Bandende (Montage) oder in der Werkstatt per ISO-Schnittstelle (Diagnose-Schnittstelle) und ausgeübter Bremspedal-Betätigung.

Trotz intakter Elektrik und trotz einer Betätigung des Bremswertgebers 1 werden dann die beiden Magnetventile 14 und 17 nicht bestromt, sie bleiben also offen. Es ist auch möglich, sie anfänglich zu bestromen, und sie dann im Laufe einer Bremsung erst umzuschalten.

Sobald die beiden Rückhalt-Magnetventile 14 und 17 stromlos, also offen, geschaltet werden, müssen natürlich die anderen Magnetventile 12, 13 und 15, 16 schließen.

Während der Öffnungszeit der beiden Rückhalt-Magnetventile 14 und 17 wird dann bei der Abgleichbremsung der Druck mit den Drucksensoren 26 und 27 erfaßt. Die beiden dabei gemessenen Druckwerte sollten identisch sein, da bei offenen Magnetventilen 14 und 17 die beiden Drucksensoren 26 und 27 miteinander verbunden sind. Wird aber trotzdem eine Abweichung der beiden gemessenen Drücke dp festgestellt, so ist dies z.B. auf ein Abdriften der Drucksensoren zurückzuführen. Der Wert dp kann dabei über dem gemessenen Druck unterschiedlich sein.

Der dann erforderliche Abgleich kann nun so vorgenommen werden, daß eine im elektronischen Steuergerät 11 abgelegte Zuordnung "Spannung-Druck" für die Drucksensoren 26 und 27 geändert wird. Z.B. kann für jeden Drucksensor 26 bzw. 27 der Mittelwert der beiden gemessenen Werte von z.B. 3 bar und 3,5 bar, also 3,25 bar genommen werden.

Ist aber der gemessene Druckwert dp so groß, daß ein im Steuergerät abgelegter Grenzwert dpₘₐₓ überschritten wird, so wird eine Warnung an den Fahrer ausgegeben.

## Patentansprüche

1. Elektro-pneumatische Fahrzeug-Bremsanlage mit einem elektro-pneumatischen Bremswertgeber (1) sowie mit einem elektrischen und einem pneumatischen Steuerkreis (I, II), über die wenigstens zwei, verschiedenen Fahrzeugseiten zugeordnete Radbremszylinder (5, 6) mit je einem vorgeordneten Relaisventil (29, 30) ansteuerbar sind, über das beim Bremsen Druckluft aus einem Vorratsbehälter (4) in den jeweiligen Bremszylinder (5, 6) und beim Bremslösen zur Außenluft gelangt, wobei jedem Relaisventil (29, 30) zwei im elektrischen Steuerkreis (I) liegende Magnetventile (12, 13, 15, 16) und als drittes ein normalerweise bei intakter Elektrik geschlossenes, bei ausgefallener Elektrik in seinem geöffneten Zustand verbleibendes, im pneumatischen Steuerkreis (II) zwischen dem Bremswertgeber (1) und dem Relaisventil (29, 30) liegendes Rückhalt-Magnetventil (14, 17) sowie ein Drucksensor (26, 27) zum Erfassen des Druck-Ist-Wertes zugeordnet sind, dadurch gekennzeichnet, daß die Rückhalt-Magnetventile (14, 17) auch bei intakter Elektrik abhängig von in einem elektronischen Steuergerät (11) gespeicherten Werten oder erfaßten Sensorsignalen bei Betätigung des Bremswertgebers (1) zumindest zeitweise gleichzeitig in Offenstellung geschaltet werden und daß während dieser Öffnungs-Zeiten oder danach ein Abgleich der Drucksensoren (26, 27) in Bezug auf die miteinander verglichenen Steuerdrücke der Relaisventile (29, 30) oder Radbremsdrücke durchgeführt wird.

2. Elektro-pneumatische Fahrzeug-Bremsanlage nach Anspruch 1, dadurch gekennzeichnet, daß für jeden Drucksensor (26, 27) im elektronischen Steuergerät (11), z.B. per Software, eine Spannung-Druck-Zuordnung abgelegt ist und daß diese Spannung-Druck-Zuordnung verändert wird.

3. Elektro-pneumatische Fahrzeug-Bremsanlage nach Anspruch 1 oder 2, dadurch gekennzeichnet, daß der Abgleich der Drucksensoren (26, 27) durchgeführt wird bei einem Druck-Soll-Wert Pₛₒₗₗ, der einen Druck-Soll-Grenzwert Pₛₒₗₗ _{Grenz} nicht überschreitet, und/oder bei einer Fahrzeug-Geschwindigkeit V, welche kleiner als eine Fahrzeug-Grenzgeschwindigkeit V_{Grenz} ist.

4. Elektro-pneumatische Fahrzeug-Bremsanlage nach Anspruch 1, dadurch gekennzeichnet, daß der Abgleich jeweils beim Stillstand des Fahrzeugs erfolgt.

## Claims

1. Electropneumatic vehicle braking system having an electropneumatic braking value transmitter (1), and having an electrical and a pneumatic control circuit (I, II) via which at least two wheel brake cylinders (5, 6) which are assigned to different vehicle sides can be driven by in each case one upstream relay valve (29, 30) via which during braking compressed air passes from a reservoir (4) into the respective brake cylinder (5; 6) and to the ambient air during disengagement of the brakes, each relay valve (29, 30) being assigned two solenoid valves (12, 13; 15, 16) situated in the electrical control circuit (I) and, as a third valve, a backup solenoid valve (14; 17), which is normally closed when the electrical system is intact, remains in its opened state when the electrical system fails and is situated in the pneumatic control circuit (II) between the braking value transmitter (1) and the relay valve (29, 30), as well as a pressure sensor (26; 27) for detecting the actual pressure value, characterized in that even when the electrical system is intact the back-up solenoid valves (14, 17) are switched simultaneously at least temporarily into the open position as a function of values stored in an electronic control unit (11) or of detected sensor signals when the braking value transmitter (1) is actuated, and in that during these times of opening or thereafter, compensation of the pressure sensors (26, 27) is carried out with reference to the control pressures, compared with one another, of the relay valves (29, 30) or wheel brake pressures.

2. Electromagnetic vehicle braking system according to Claim 1, characterized in that a voltage/pressure assignment is filed, for example by software, for each pressure sensor (26, 27) in the electronic control unit (11), and in that this voltage/pressure assignment is varied.

3. Electropneumatic vehicle braking system according to Claim 1 or 2, characterized in that the compensation of the pressure sensors (26, 27) is carried out for a desired pressure value P_{desired} which does not exceed a desired pressure limiting value P_{desired} ₗᵢₘᵢₜ and/or at a vehicle speed V which is lower than a limiting vehicle speed Vₗᵢₘᵢₜ.

4. Electropneumatic vehicle braking system according to Claim 1, characterized in that the compensation is carried out in each case when the vehicle is stationary.

## Revendications

1. Installation de freinage électro-pneumatique d'un véhicule comportant un capteur électro-pneumatique de valeur de mesure de freinage (1) ainsi qu'un circuit de commande électrique et un circuit de commande pneumatique (I, II) qui commandent au moins deux cylindres de frein de roue (5, 6) associés à deux côtés différents du véhicule avec chaque fois une soupape relais (29, 30) en amont, par laquelle l'air comprimé de freinage alimente le cylindre de frein (5, 6) respectif à partir d'un réservoir (4) et s'échappe à l'extérieur lorsqu'on relâche le frein, deux électrovannes (12, 13 ; 15, 16) branchées dans le circuit de commande électrique (I) à chaque soupape relais (29, 30) étant associées et comme troisième soupape une soupape électromagnétique de retenue (14 ; 17) normalement fermée lorsque le circuit électrique est intact, et qui, lorsque le circuit électrique est défaillant, reste dans son état ouvert, dans le circuit de commande pneumatique (II) entre le capteur de valeur de mesure (1) et la soupape relais (29, 30), ainsi qu'un capteur de pression (26 ; 27) pour détecter la valeur réelle de la pression, installation caractérisée en ce que les soupapes électromagnétiques de retenue (14, 17) sont commutées au moins en partie dans le temps, simultanément, même lorsque le circuit électrique est intact, en fonction de valeurs enregistrées par le dispositif de commande électronique (11) ou de signaux de capteur détectés lors de l'actionnement du capteur de valeur de freinage (1), et en ce que pendant ces durées d'ouverture, ou après celles-ci, se produit un équilibrage des capteurs de pression (26, 27) en fonction des pressions de commande des soupapes relais (29, 30) ou des pressions de frein de roue qu'elles comparent.

2. Installation de freinage électro-pneumatique pour véhicule, caractérisée en ce que pour chaque capteur de pression (26, 27), on inscrit une relation tension/pression, par exemple par programme dans le dispositif de commande électronique (11) et on modifie cette relation tension/pression.

3. Installation de freinage électro-pneumatique de véhicule selon la revendication 1 ou 2, caractérisée en ce que l'on effectue l'équilibrage des capteurs de pression (26, 27) pour une valeur de consigne de pression (P_{cons}) qui ne dépasse pas une valeur limite de consigne de pression (P_{cons.lim}) et/ou pour une vitesse de véhicule (V) inférieure à une vitesse limite de véhicule (Vₗᵢₘ).

4. Installation de freinage électro-pneumatique de véhicule selon la revendication 1, caractérisée en ce que l'équilibrage se fait chaque fois à l'arrêt du véhicule.
